(19) Europäisches Patentamt
European Patent Office
Office européen des brevets

(11) EP 0 783 549 B1

(12) EUROPEAN PATENT SPECIFICATION

(45) Date of publication and mention
of the grant of the patent:
**06.12.2000 Bulletin 2000/49**

(51) Int Cl.⁷: **C09D 11/02**, C09D 11/10,
C09D 11/00

(21) Application number: **95933245.3**

(22) Date of filing: **28.09.1995**

(86) International application number:
**PCT/AU95/00638**

(87) International publication number:
**WO 96/10058 (04.04.1996 Gazette 1996/15)**

(54) **IMPROVEMENTS IN INK JET INKS**

VERBESSERUNG IN TINTENSTRAHL-TINTEN

AMELIORATIONS CONCERNANT LES ENCRES DU TYPE JET D'ENCRE

(84) Designated Contracting States:
**AT BE CH DE DK ES FR GB GR IE IT LI LU MC NL PT SE**

(30) Priority: **29.09.1994 AU PM844994**

(43) Date of publication of application:
**16.07.1997 Bulletin 1997/29**

(73) Proprietor: **TONEJET CORPORATION PTY LTD Eastwood, S.A. 5063 (AU)**

(72) Inventors:
• **NICHOLLS, Stephen, Lansell**
**Willunga, S.A. 5172 (AU)**

• **ALSTON, John, Thomas**
**Norht Adelaide, S.A. 5006 (AU)**

(74) Representative: **Perry, Robert Edward**
**GILL JENNINGS & EVERY**
**Broadgate House**
**7 Eldon Street**
**London EC2M 7LH (GB)**

(56) References cited:
**EP-A- 0 408 333      AU-A- 7 063 494**
**US-A- 5 112 398**

• **PATENT ABSTRACTS OF JAPAN vol. 014, no. 184 (C-0709), 13 April 1990 & JP 02 029473 A (RICOH CO LTD), 31 January 1990,**

**Description**

FIELD OF THE INVENTION

This invention relates to inks and more particularly to inks suitable for ink jet printing apparatus which are desired to be operated at a selected frequency.

BACKGROUND OF THE INVENTION

Inks are generally a liquid with a dye dissolved in them. Inks are also known which comprise a liquid and particles dispersed in the ink. The actual composition of machine inks as distinct from writing inks is determined by the method of application of such inks.

There are two prime types of ink jet application techniques in use today. The first of these is known as continuous ink jet and the second is impulse ink jet.

In continuous ink jet systems, droplets of ink are produced as a result of hydrostatic pressure on a liquid ink forcing said ink through a nozzle. The nozzle can be stimulated, such as by piezo-electric vibration to cause the droplets to be ejected on a regular basis. At the point of formation, the droplets may be conductively and/or electrochemically charged and subsequently pass through electrodes which provide a constant electrostatic field causing these droplets to be deflected. Therefore the required droplets are controlled to a substrate and unwanted ones are removed. Due to the charging requirements it is necessary that the ink be conductive. Such an ink may be water or solvent based and the colorant may be a pigment or soluble dye.

In the impulse ink jet system, droplets are produced only as required by the generation of a pressure disturbance within the ink adjacent to a jet nozzle. The application of pressure may be by stimulation caused by a piezo-electric crystal or by thermal stimulation where a micro bubble is created by an electrically resistive heater. Typical inks are water based and use a dye for the colorant though the use of solvents and pigments are not precluded for this process. As there is no need for droplet charging there is no specific requirement concerning conductivity of the ink.

A further embodiment of the impulse system is hot melt ink jet technology. This process is similar to the piezo-electric drop on demand except that the ink is solid at room temperature but is maintained at an elevated temperature in the print head such that it is a liquid under operating conditions. Again therefore, there is no need for the conductivity of the ink to be suited to some equipment performance standard.

A final system that utilises small electromechanical valves to produce droplets is known as the valve jet process. This is in essence a micro spray gun system and produces much larger droplets than the true ink jet technologies. As the droplets are produced mechanically there is no requirement concerning the conductivity of the ink.

The preceding technologies are limited in terms of achievable resolution due to droplet formation being a function of the jet nozzle diameter. The smallest nozzles used have diameter in the range of 7.5 to 10 micrometers which produce droplets of the order of 14 to 20 micrometers and this translates to a dot size of 30 to 40 micrometers on selected papers. Further, the inks used in these small nozzle jet printers are based on water soluble dyes, as pigment based inks cause problems with nozzle blocking. Therefore the advantages of pigment formulations, namely better waterfastness and lightfastness as well as a broader range of available colours, are precluded.

Electrostatic ink jet is a further technology which is characterised by droplets being drawn from an orifice under the influence of an electrostatic field. This field acting between a valving electrode and the orifice, attracts free charges within the ink to its surface such that a droplet is produced when the electrostatic pull exceeds the surface tension of the ink. As this technique relies on attraction of free charges, it requires that the ink be conductive.

WO-A-9311866 describes producing variable sized droplets of an ink that contain a high concentration of particulate material. Specific advantages conveyed by this process include the ability to form droplets as small as a few micrometers while still using pigments as the colourant material. This is because the size of the droplets is controlled primarily by the voltage on an ejection point plus the ability of the particles to be charged, and so is not limited by the size of an ink jet nozzle. Also, the particulate material is significantly concentrated in the ejected droplets. Therefore, high resolution and high density images based on light and water-resistant pigments can be produced.

SUMMARY OF THE INVENTION

According to the present invention, in a method of matching the rate of droplet formation for each point of a multi-ejection point electrostatic printer wherein different colour of inks are adapted to be ejected from selected points and each ink has a different characteristic frequency of droplet formation depending on the characteristics of an insoluble marking particle of the ink and the rheology of a liquid portion of each ink, the method comprises adding a selected amount of a mobility modifier to each ink to vary its characteristic droplet formation frequency such that the rate of droplet formation frequency is substantially the same for each ink.

The frequency at which droplets are formed can be an important consideration when matching printing head technologies and inks to desired printing speeds and when using multiple inks in a printing head for use with colour printing for instance.

It has been found that a number of factors seem to influence a characteristic frequency of droplet formation using the printing technology discussed in WO-A- 9311866. While some of the factors are ones that cannot be easily varied it has been found that, surprisingly, modifications to ink formulations can influence the frequency of droplet formation.

This invention will be discussed generally in relation to printing with inks but it is to be realised that the invention is not so limited but can be used for a number of applications in which it is required to apply or administer fine particulate material which can be supported in a liquid at a particular rate.

DESCRIPTION OF THE INVENTION

For use in the present invention, an ink for an electrostatic printer of the drop on demand type may be used, the printer being adapted to be operated at a selected frequency of droplet formation, the ink being of a type adapted to be agglomerated and ejected from an ejection location in the printer at the selected frequency, the ink comprising a non conductive liquid, insoluble chargeable marking particles, and a mobility modifier for the particles, the mobility modifier being a compound which is adapted to interact with or be adsorbed onto the chargeable particles whereby to vary the chargeability of the particles and hence a charge to mass ratio of the particles, wherein the quantity of mobility modifier in the ink is varied to enable the droplets of ink to be agglomerated and ejected at the selected frequency.

The mobility modifier may be present in a range from 0.05 to 20% by weight of the ink. The mobility modifier may be selected from any material that is soluble or partially soluble with the carrier liquid and that which assists in the charging process.

The liquid may be any suitable liquid with the characteristics as discussed above and may include aliphatic hydrocarbons such as hexane, cyclohexane, iso-decane, Isopar (manufactured by Exxon) and Shellsol T (manufactured by Shell); aromatic hydrocarbons such as xylene, toluene and Solvesso 100 (manufactured by Exxon); chlorinated solvents such as diethylene chloride and chloroform; silicone fluids or oils such as dimethyl polysiloxane, for instance DC 200 (manufactured by Dow Corning) and cyclic dimethyl polysiloxane, for instance DC 345 (manufactured by Dow Corning) and vegetable oils such as olive, safflower, sunflower, soya and linseed oil.

The marking particle may be a pigment, an insoluble dyestuff, a polymer or mixture thereof or it may be a pharmaceutical and may be present in a concentration of from 0.5% to 30% by weight of the ink, preferably 3% to 20%. It is surprising that an ink jet ink with such a high solids content can be successfully used, thereby reducing formulation and storage costs and allowing the use of smaller tanks, pumps and cartridges for a given solids content.

The mobility modifier may be a metal salt of a carboxylic acid, a metal soap, a fatty acid, lecithin, an organic phosphorus compound, a succinimide, a sulphosuccinate or a mixture thereof. Alternatively the mobility modifier may be a soluble or partially soluble resin such as a modified rosin ester, an acrylic, a vinyl, a hydrocarbon or a mixture thereof. The mobility modifier may be present in a concentration of from 0.05% to 20% by weight and a preferred range of from 0.1% to 10% by weight.

It will be realised that one of the important features of the ink according to this invention is that the liquid portion of the ink is essentially non-conductive and hence the maximum amount of the mobility modifier used must be that will not reduce the conductivity of the liquid to a point where controllable droplets will not form.

Marking particles that are insoluble in the liquid may be selected for their particular proposed end use and may be made from a wide range of colorants, polymers and chemicals or mixtures thereof. Examples of colorants suitable for use in the ink are organic pigments such as pigment yellow 1, pigment yellow 14, pigment red 48:2, pigment red 122, pigment blue 15:3 and pigment blue 56; inorganic pigments such as pigment white 6, pigment yellow 35, pigment blue 27, pigment black 7 and pigment black 11; solvent dyes such as solvent red 7, solvent yellow 88, solvent blue 49, basic red 1 and basic blue 26 and metallic pigments such pigment metal 1 and pigment metal 2.

Examples of polymers suitable for use in the ink as particles are epoxy resins such as bisphenol A epoxy, novolac epoxy and cycloaliphatic epoxy; acrylic resins such as polymers and copolymers of acrylic acid and esters thereof, polymers and copolymers of methacrylic acid and esters thereof; vinyl resins such as polymers and copolymers including vinyl acetate, vinyl chloride, vinyl alcohol and vinyl butyral; alkyd resins such as oil, phenolic and rosin modified alkyds and modified rosin esters such as dimerised pentaerythritol rosin ester. These polymers may be dyed or include pigments dispersed therewith.

Examples of chemicals suitable for use as the particles in the ink are pharmaceuticals such as acetyl salicylic acid, sucrose and ascorbic acid, agricultural chemicals such as copper oxychloride and elemental sulphur and industrial chemicals. The marking particles may be present in a concentration of from 0.5% to 30% by weight of the composition.

In addition, resins and polymers that are soluble or partially soluble in the liquid may be used to disperse the marking particles in the liquid and to function as a binder for said marking particles to a substrate. Examples of suitable resins include certain modified rosin esters, acrylic resins and vinyl resins that are similar to those listed above except that these have larger alkyl groups which impart the solubility in the liquid. In addition hydrocarbon resins such as alpha methyl styrene and polyisobutylene are also suitable.

The mobility modifier may be any material that is soluble or partly soluble in the liquid and that assists in the charging process. Examples of such agents include metal salts such as lithium, cadmium, calcium, manganese and magnesium salts of heptanoic acid, zirconium, aluminium, cobalt and manganese salts of octanoic acid and zirconium, aluminium, cobalt and manganese salts of 2-ethyl hexanoic acid; fatty acids; lecithin; organic phosphorus compounds; succinimides; sulphosuccinates such as sodium dihexyl sulphosuccinate and sodium dioctyl sulphosuccinate and polar solvents such as alcohols, ketones and esters. Also the previously mentioned soluble polymers and resins that provide the particle dispersion and binder functions have been found to contribute to mobility modification. It is important that the quantity of the mobility modifier added to the formulation does not decrease the electrical resistivity of the ink lower than the limit of $10^9$ ohm.cm. The action of such mobility modifiers in the ink is not fully understood but it is believed that they assist with charging of the particles to assist with the formation of agglomerations of charged particles in the non-conductive liquid in the presence of a non-uniform electrostatic field of significant gradient on or about an ejection location. The mobility modifier may be present in a concentration of from 0.05% to 20% by weight of the ink composition.

The ink jet ink according to the present invention may be prepared by dispersing the said marking particles and other aforementioned components into the liquid. A variety of processes can be employed for the preparation of the ink including ball mills, attritors, colloid mills, three-roll mills, pearl mills and high speed dispersers. Alternatively the particles may be formed by polymerisation of the particles in the liquid.

With previous formulations of ink for ink jet printers the mobility of particles in a carrier liquid has not been an important factor because there has not been any requirement for mobility of particles within the droplets only a mobility of the droplet as a whole. This is because there has not been any requirement or disclosure of concentration of particles in and during droplet formation.

With the new technology described in PCT Patent Application No. WO-A-9311866 in which agglomeration of particles in an ink is used to provide a dense marking particle then the mobility of the particles in the liquid is important. If it takes longer for a selected number of particles to agglomerate then frequency of droplet formation will not be as high as for another formulation of an ink in which the particles have a higher mobility. It has been found that the characteristic frequency of ink drop ejection for a particular ink is dependant on ink formulation and composition. This can include not only the type of insoluble marking particle but also the size and method of formation such as grinding of such a particle. In particular it has been found that a characteristic frequency of droplet formation can be varied by varying the amount of a mobility modifier in the formulation.

While the exact mechanism responsible for this relationship is unclear it is thought that an increased level of mobility modifier results in an increased charge to mass ratio of the insoluble particle. The insoluble particle therefore acquires a higher mobility in the ink carrier liquid when the electric field is applied and this then results in greater speed of agglomeration to a size which can be ejected and hence a higher ejection frequency.

The mobility of the ink particles through the ink carrier liquid in response to an applied electric field may be described by the following equation.

$$\mu = q / 6\pi\eta r$$

where $\mu$ is the mobility, q is the particle charge, $\eta$ is the viscosity of the medium and r is the particle radius.

The mechanism of particle charging is also not fully understood and depends on the nature of chemical used. For example metal carboxylate mobility modifiers are thought to form inverse micelles when dissolved in non-aqueous liquids. Ion exchange then occurs between the ink particles and the inverse micelles, the particles being charged positively while the inverse micelles are charged negatively and act as counter ions.

The sum result is that an increase charge on the particle occurs and for a given set of circumstances the mobility of the particle is modified.

A practical application to which the present invention may be directed is in the case of a multi injection location printing head in which different colours of inks are used for a colour printing process. The characteristic frequency of droplet formation for the various inks can vary up to sixfold dependant on the pigment used. By increasing the frequency the droplet formation for the "slower" inks and perhaps reducing the frequency of droplet formation for the "faster" inks then each of the inks can be made to agglomerate and eject and substantially the same rate hence avoiding problems of registration of different colours of a printed image.

Examples of applications for the ink according to this invention are diverse and include office printers, component marking, magnetic ink character recognition, to mark integrated circuits, to mark glass and ceramics, to mark metals and alloys, food stuffs marking, textile printing and the making of printing plates to function as an offset master. It will be realised that the proposed end use will determine the selection of the various components.

The ink composition of the present invention may also be used for the administration of pharmaceuticals either directly into an animal or human or onto a substrate such as an inert tablet where it is desired to apply an exact amount of the pharmaceutical. The selection of a characteristic rate or frequency of droplet formation will permit accurate dispensing of pharmaceuticals.

EXAMPLES

This then generally describes the invention but to assist with understanding the invention reference will now be made to examples of ink formulations and variation in their characteristic frequency of droplet formation by variation of the amount of mobility modifier.

EXAMPLES 1 - 6

| Ink Concentrate 1 | |
| --- | --- |
| Hostaperm Pink E | 40g |
| FOA-2 | 4g |
| Isopar L | 356g |

The above ingredients were added to a ball jar and milled for 2 days to prepare a magenta ink concentrate.

The following ink dispersions were then prepared

| Example | Ink Concentrate 1 | 6% Nuxtra Zirconium | Isopar G |
| --- | --- | --- | --- |
| 1 | 10.0g | 0.1g | 89.9g |
| 2 | 10.0g | 0.2g | 89.8g |
| 3 | 10.0g | 0.3g | 89.7g |
| 4 | 10.0g | 0.5g | 89.5g |
| 5 | 10.0g | 2.0g | 88.0g |
| 6 | 10.0g | 5.0g | 85.0g |

These examples were tested in the ink jet printing device described in PCT/AU92/00665 to image copy bond paper where the following performance was observed.

| Example | % Mobility modifier | Dot Frequency | Dot Size |
| --- | --- | --- | --- |
| 1 | 0.1 | 1.5kHz | 60 μm |
| 2 | 0.2 | 4.5 kHz | 50 μm |
| 3 | 0.3 | 7.0 kHz | 40 μm |
| 4 | 0.5 | 8.0 kHz | 30 μm |
| 5 | 2.0 | 10.0 kHz | 20 μm |
| 6 | 5.0 | 15.0 kHz | 15μm |

Examples 1-6 illustrate how the frequency of an ink may be controlled by varying the level of mobility modifying agent (zirconium octanoate). In one possible configuration, the ink from example 1 may be suitable for use in a single pixel chart recorder operating at 1kHz and a chart speed in the order of 60mm/second. In another, example 3 ink would be suitable for use in a monotone serial printer device, operating at a speed of 7 kHz with a resolution of 600dpi.

Isopar G and Isopar L are isoparaffinic solvents made by Exxon Chemical Hostaperm Pink E (CI Pigment Red 122) is made by Hoechst AG FOA-2 is a petroleum additive made by DuPont
6% Nuxtra Zirconium is a solution of zirconium octanoate in white spirits made by Hüls America Inc.

EXAMPLE 7

| Monolite Yellow GNA | 40g |
|---|---|
| FOA-2 | 4g |
| 6% Nuxtra Zirconium | 8g |
| Isopar L | 348g |

The above ingredients were added to a ball jar and milled for 2 days to prepare a yellow ink concentrate. This concentrate was then diluted 1:10 with Isopar G to form an ink dispersion with a mobility modifying content of 0.2% by weight.

EXAMPLE 8

| Microlith Black CT | 40g |
|---|---|
| Reflex Blue 3G | 10g |
| FOA-2 | 4g |
| 6% Nuxtra Zirconium | 40g |
| Isopar L | 306g |

The above ingredients were added to a ball jar and milled for 2 days to prepare a black ink concentrate. This concentrate was then diluted 1:10 with Isopar G to form an ink dispersion with a mobility modifying agent content of 1.0% by weight.

EXAMPLE 9

| Hostaperm Pink E | 40g |
|---|---|
| FOA-2 | 4g |
| 6% Nuxtra Zirconium | 12g |
| Isopar L | 344g |

The above ingredients were added to a ball jar and milled for 2 days to prepare a magenta ink concentrate. This concentrate was then diluted 1:10 with Isopar G to form an ink dispersion with a mobility modifying agent content of 0.3% by weight.

EXAMPLE 10

| Irgalite Blue LGLD | 40g |
|---|---|
| FOA-2 | 4g |
| 6% Nuxtra Zirconium | 40g |
| Isopar L | 316g |

The above ingredients were added to a ball jar and milled for 2 days to prepare a cyan ink concentrate. This concentrate was then diluted 1:10 with Isopar G to form an ink dispersion with a mobility modifying agent content of 1.0% by weight.

Inks described in examples 7 - 10 tested in the ink jet printing device described in PCT/AU92/00665 to image copy bond paper where the following performance was observed.

| Example | Dot Frequency | Dot Size |
|---------|---------------|----------|
| 7 | 8 kHz | 40 μm |
| 8 | 8 kHz | 40 μm |
| 9 | 7 kHz | 40 μm |
| 10 | 7 kHz | 40 μm |

This set of four inks would be suitable for use in a four colour desk top printer operating at 7 kHz and a resolution of 800 dpi.

Monolite Yellow GNA (CI Pigment Yellow 1) is made by ICI Australia Irgalite Blue LGLD (CI Pigment Blue 15: 3) is made by Ciba-Geigy Microlith Black CT (CI Pigment Black 7) is made by Ciba-Geigy Reflex Blue 3G (CI Pigment Blue 18) is made by Hoechst AG.

It will be seen that by this invention a liquid ink for a ink jet printer can be formulated which can be adapted to be ejected at a selected frequency or alternatively for multi-colour printing the frequency of ejection for each of the colours can be matched to a selected value by the addition of a mobility modifier.

Throughout this specification and the claims that follow unless the context requires otherwise, the words 'comprise' and 'include' and variations such as 'comprising' and 'including' will be understood to imply the inclusion of a stated integer or group of integers but not the exclusion of any other integer or group of integers.

## Claims

1. A method of matching the rate of droplet formation for each point of a multi-ejection point electrostatic printer wherein different colour of inks are adapted to be ejected from selected points and each ink has a different characteristic frequency of droplet formation depending on the characteristics of an insoluble marking particle of the ink and the rheology of a liquid portion of each ink, the method comprising adding a selected amount of a mobility modifier to each ink to vary its characteristic droplet formation frequency such that the rate of droplet formation frequency is substantially the same for each ink.

2. A method according to claim 1, wherein the mobility modifier is selected from metal salts of carboxylic acids, metal soaps, fatty acids, lecithin, organic phosphorus compounds, succinimides, sulphosuccinates, soluble or partially soluble resins such as modified rosin ester, acrylics, vinyls, hydrocarbons and mixtures thereof.

3. A method according to claim 1, wherein the mobility modifier is selected from lithium, cadmium, calcium, manganese and magnesium salts of heptanoic acid, zirconium, aluminium, cobalt and manganese salts of octanoic acid, and zirconium, aluminium, cobalt and manganese salts of 2-ethylhexanoic acid.

4. A method according to any preceding claim, wherein the mobility modifier is present in a concentration of from 0,05% to 20% by weight.

5. A method according to claim 4, wherein the mobility modifier is present in a concentration of from 0.1% to 10% by weight.

## Patentansprüche

1. Verfahren zur Anpassung der Geschwindigkeit der Tröpfchenbildung bei jedem Punkt eines elektrostatischen Druckers mit mehreren Ausstoßpunkten, bei dem verschiedene Tintenfarben so angepasst sind, dass sie von ausgewählten Punkten ausgestoßen werden und jede Tinte eine unterschiedliche charakteristische Tröpfchenbildungsfrequenz aufweist, die von den Eigenschaften eines unlöslichen Markierungsteilchens der Tinte und der Rheologie eines flüssigen Teils jeder Tinte abhängt, wobei das Verfahren umfasst, dass man jeder Tinte eine ausgewählte Menge eines Mobilitäts-Modifikationsmittels zusetzt, um ihre charakteristische Tröpfchenbildungsfrequenz so zu variieren, dass die Höhe der Tröpfchenbildungsfrequenz für jede Tinte im wesentlichen dieselbe ist.

2. Verfahren gemäß Anspruch 1, in dem das Mobilitäts-Modifikationsmitttel aus Metallsalzen von Carbonsäuren, Metallseifen, Fettsäuren, Lecithin, organischen Phophor-Verbindungen, Succinimiden, Sulfosuccinaten, löslichen oder teilweise löslichen Herzen, wie modifiziertem Kolophoniumester, Acrylharzen, Vinylharzen, Kohlenwasserstoffen und deren Mischungen, ausgewählt ist.

3. Verfahren nach Anspruch 1, in dem das Mobilitäts-Modifikationsmittel aus Lithium-, Cadmium-, Calcium-, Mangan- und Magnesiumsalzen von Heptansäure, Zirkonium-, Aluminium-, Cobalt- und Mangansalzen von Octansäure und Zirkonium-, Aluminium-, Cobalt- und Mangansalzen von 2-Ethylhexansäure ausgewählt ist.

4. Verfahren nach irgendeinem vorangehenden Anspruch, in dem das Mobilitäts-Modifikationsmittel in einer Konzentration von 0,05 bis 20 Gewichts-% vorliegt.

5. Verfahren nach Anspruch 4, in dem das Mobilitäts-Modifikationsmittel in einer Konzentration von 0,1 bis 10 Gewichts-% vorliegt.

**Revendications**

1. Procédé pour régler la vitesse de formation des gouttelettes pour chaque point d'une imprimante électrostatique à plusieurs points d'éjection, dans lequel différentes couleurs d'encre sont adaptées à être éjectées à partir de points choisis et dans lequel chaque encre possède une fréquence caractéristique de formation des gouttelettes différente, dépendant des caractéristiques des particules de marquage insolubles de l'encre et de la rhéologie de la partie liquide de chaque encre, le procédé comprenant l'addition à chaque encre d'une quantité déterminée d'un agent modifiant la mobilité afin de modifier sa fréquence caractéristique de formation des gouttelettes de sorte que le taux de la fréquence de formation des gouttelettes est pratiquement le même pour chaque encre.

2. Procédé selon la revendication 1, dans lequel l'agent modifiant la mobilité est choisi parmi les sels métalliques des acides carboxyliques, les savons métalliques, les acides gras, la lécithine, les composés organiques du phosphore, les succinimides, les sulfosuccinates, les résines solubles ou partiellement solubles, telles qu'un ester de colophane modifié, les composés acryliques, les composés vinyliques, les hydrocarbures et leurs mélanges.

3. Procédé selon la revendication 1, dans lequel l'agent modifiant la mobilité est choisi parmi les sels de lithium, de cadmium, de calcium, de manganèse et de magnésium de l'acide heptanoïque, les sels de zirconium, d'aluminium, de cobalt et de manganèse de l'acide octanoïque et les sels de zirconium, d'aluminium, de cobalt et de manganèse de l'acide 2-éthylhexanoïque.

4. Procédé selon l'une quelconque des revendications précédentes, dans lequel l'agent modifiant la mobilité est présent en une concentration comprise entre 0,05% et 20% en masse.

5. Procédé selon la revendication 4, dans lequel l'agent modifiant la mobilité est présent en une concentration comprise entre 0,1% et 10% en masse.